(19) Europäisches Patentamt
European Patent Office
Office européen des brevets

(11) **EP 3 239 795 A1**

(12) **EUROPEAN PATENT APPLICATION**

(43) Date of publication:
01.11.2017 Bulletin 2017/44

(51) Int Cl.:
*G05B 19/418* [(2006.01)]

(21) Application number: 16167311.6

(22) Date of filing: 27.04.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

(72) Inventors:
• **Draht, Rainer**
**68239 Mannheim (DE)**
• **Weber, Peter**
**67117 Limburgerhof (DE)**

(74) Representative: **Marks, Frank**
**ABB AG**
**GF-IP**
**Wallstadter Strasse 59**
**68526 Ladenburg (DE)**

(54) **A METHOD AND SYSTEM FOR COMMISSIONING AND OPTIMIZATION OF A PRODUCTION LINE**

(57) A method for commissioning and optimization of a production line, whereby in the real world the production line is composed of at least two production machines, said production machines being synchronized, and where there is a material flow along the production line and between the production machines, wherein the method further comprises the steps of simulating at least part of the material flow in the production line, and synchronizing the machines along the at least partly simulated material flow.

Fig. 1

## Description

The invention is about a method for commissioning and optimization of a production line according to the preamble of claim 1.

The invention is further about a system for commissioning of a production line.

Such a production line can be, as an example only, a packaging line in the food & beverage industry. It is composed of a number of production machines. The term production machine is meant to refer to various types of machines or machine assemblies. It may refer to a filling machine filling a liquid product into plastic bags. It may as well refer to a production cell with a robot inside, whereby the robot may even have its own controller. Or it may refer to material or product handling machines within the production line, such as a packager, a labeler, a palletizer etc, or a press line where robots load and unload presses.

Line builders and system integrators put together complete production lines, integrating production machines typically from different vendors. Such a complex production line has to be engineered and commissioned before going live into production.

But today a production line can only be engineered and commissioned when the production machines are physically available. For a new production line, machine delivery times from the machine builder may be quite long, especially for customized machines. Once the machines are physically available, line engineering and commissioning can be performed, including for example configuration of common alarm lists, line supervision and orchestration of machines, configuration of common production parameters, configuration of machine to machine communication etc. This is a time consuming process results in a late the start of production.

So it is the objective of this invention to provide a method for commissioning and optimization of a production line, which allows for a simpler and easier line engineering, testing and commissioning and optimization, enabling a line builder or system integrator to hand over significantly earlier the production line for start of production to the end customer.

The objective is achieved by a method for commissioning and optimization of a production line with the features of claim 1, and by a system for commissioning of a production line with the features of claim 14.

According to the invention a method for commissioning and optimization of a production line, whereby in the real world the production line is composed of at least two production machines, said production machines being synchronized, and where there is a material flow along the production line and between the production machines, further comprises the steps of simulating at least part of the material flow in the production line, and synchronizing the machines along the at least partly simulated material flow.

The advantage is that due to the partial simulation of the material flow and the synchronizing of the machines along the partially simulated material flow it is not necessary to wait for complete physical installation of all the material flow in real world conditions. The partial simulation of the material flow allows for the commissioning and optimization in an early state, a good time before the installation of the real world production line would have been fully accomplished.

In an advantageous embodiment, the method further comprises the steps of providing at least one of the production machines as a virtual machine, the machines being integrated to form a virtual production line or a mixed production line combining real and virtual machines, wherein the virtual production machine and the virtual production line are virtual versions of their respective real world equivalents, and further providing a material flow simulation interface at the virtual machine for simulating the virtual material flow.

In an advantageous embodiment, the method further comprises the step of providing a data communication interface to a real machine for simulating the virtual material flow.

In an advantageous embodiment, the method further comprises the step of providing a logical interaction means by which a logical interaction between the machines is achievable.

In an advantageous embodiment, the method further comprises the steps of providing virtual controllers to the virtual production machine, said virtual controllers behaving like real controllers, running the real control applications, and said virtual controllers being connected to virtual sensors, virtual actuators or other virtual devices.

So advantageously the method comprises providing at least two production machines, of which at least one is a virtual machine, which are integrated to form a virtual production line or a mixed production line, wherein a virtual production machine and a virtual production line are virtual versions of their respective real world equivalents; further providing a logical interaction means by which a logical interaction between the virtual machines is achieved, further providing material flow simulation means, by which the virtual material flow through the virtual production line is simulated.

A mixed production line is a production line which comprises at least two production machines, of which at least one is a real machine and at least one is a virtual machine.

In an advantageous embodiment, the method further comprises providing the virtual production machine as a container, including all required virtual controllers (e.g. PLCs, robot controllers, drive controllers), optional virtual fieldbuses, simulation tool, etc. and their interconnection, further including all required software licenses and a machine management component for administrating the machine like the real machine (e.g. starting the machine including instantiating and running all components).

Said virtual production machine behaves like the real machine running virtual controllers behaving like real controllers running the real application and control programs and said virtual controllers being connected to virtual sensors, virtual actuators or other virtual devices.

In an advantageous embodiment, the method further comprises integrating multiple virtual production machines in a virtual production line, providing a data Communication Interface to each virtual machine and connecting the virtual machines to a superior system through the data communication interface.

In an advantageous embodiment, the method further comprises integrating multiple virtual production machines in a virtual or mixed production line and connecting to a superior system through the data communication interface.

In an advantageous embodiment the method further comprises providing a simulation Interface to the virtual machine, which includes the ability to simulate various steps of the material flow simulation. Examples for such a step of material flow simulation are loading of the CAD (computer aided design) data of the product, or the material flow synchronization. The simulation interface may be used as a material flow simulation interface.

In an advantageous embodiment, the method further comprises replacing a virtual machine by its real world equivalent once the real machine is available, without any modification, resulting in a mixed environment composed of real and virtual production machines.

In an advantageous embodiment, the method further comprises using Augmented Reality technology to superimpose the virtual machine on a real scene.

In an advantageous embodiment, the method further comprises synchronizing the virtual production machines through line orchestration using the data communication interface to send machine signals to start the next machine cycle.

In an advantageous embodiment, the method further comprises synchronizing the virtual machines on the material flow side, using a material flow simulation means similar to a virtual machine to synchronize the machines along the material flow.

In an advantageous embodiment the method further comprises synchronizing machines on the material flow using autonomous machine synchronization, wherein parts are moved from one machine to another machine.

The invention will now be described exemplarily with reference to an embodiment shown in the figures, whereby

Figure 1 shows an exemplary and schematic embodiment of a virtual production line,

Figure 2 illustrates the exemplary case where during commissioning a real part is handled by a virtual production machine,

Figure 3 illustrates the exemplary case where during commissioning a virtual part is handled by a real production machine.

In the description of the embodiments, the following four embodiment cases can be distinguished:

$$1) \quad VM - (VP) - VM$$

$$2) \quad RM - (RP) - VM$$

$$3) \quad VM - (VP) - RM$$

$$4) \quad RM - (VP) - VM$$

$$5) \quad RM - (VP) - RM$$

With VM: virtual Machine; RM: Real Machine, VP: Virtual Part; RP: Real Part

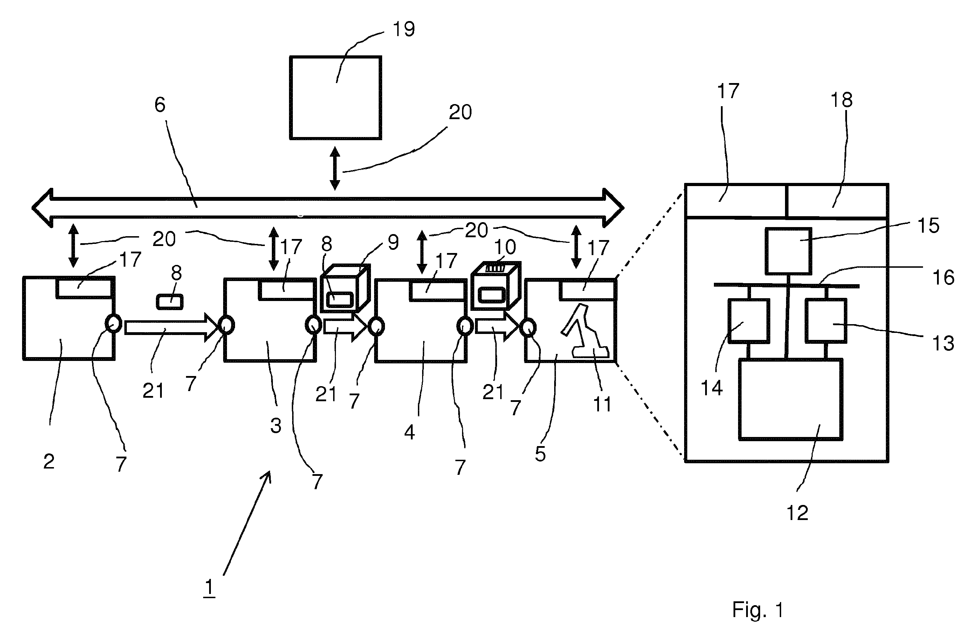

Figure 1 shows the case 1.

The schematic example of virtual production line 1, as shown in figure 1, comprises four virtual production machines 2, 3, 4, 5. The virtual machines 2, 3, 4, 5 are arranged in a line and are synchronized, so that a virtual material flow from the first virtual machine in the line, virtual machine 2, through the second and third virtual machines 3, 4 to the fourth virtual machine 5 is achieved.

In the exemplary embodiment shown here, the virtual production line 1 is a virtual packaging line for making plastic bags filled with a liquid, package them, label the package and palletize the labeled packages. So the first virtual machine 2 is a virtual bag-filling machine, it delivers at its output a virtual bag. The virtual bag 8 is delivered to the second virtual machine 3, which is a virtual packager, delivering at its output a virtual carton or package 9 with a number of the virtual bags 8 inside. The virtual carton or package 9 is delivered to the third virtual machine 4, which is a virtual labeler, virtually labeling the virtual carton or package 9 with a virtual label 10. The labeled virtual carton or package 9 is delivered to the fourth virtual machine 5, which is a virtual palletizer. The virtual palletizer 5 may comprise a virtual robot 11 integrated into a virtual palletizing cell.

A virtual production machine, like the virtual bag-filler 2, the virtual packager 3, the virtual labeler 4 and the virtual palletizer 5, behave like their real-world equivalents, they are virtual versions of their real-world equivalents. They run the real automation applications in the virtual domain.

How they do this, is schematically and exemplarily shown in figure 1 for the virtual palletizer 5. A virtual production machine has virtual controllers which behave like the real controllers, running the real control applications, and which are connected to virtual sensors, virtual actuators or other virtual devices, just as they would be in reality.

As shown by example of the virtual palletizer 5, the virtual production machine comprises a simulation model 12, a virtual robot controller 13, a virtual drive controller 14, all connected via a virtual fieldbus connection 16 to a higher level virtual controller 15. The virtual production machine in addition has a communication interface 17 and a simulation interface 18.

The virtual controllers are connected to the machine sensors and actuators via e.g. virtual fieldbuses or virtualized local I/O, equivalent to the way it would be done in the real world.

The machine behavior is simulated based on the simulation model 12 of the machine, which mimics the sensors and actuators of the machine and the material flow through the machine.

All components are executed in a common virtual time to ensure correct timing behavior. A central simulation master triggers the execution of all involved components, like virtual controllers, simulation, etc.

The usage of virtualized controllers, fieldbuses, etc. enables the concept of a virtual production machine which is not feasible using real HW controllers To facilitate the handling of a virtual production machine, the virtual production machine is provided as a software container, e.g. VMWare, Docker, etc., including all required virtual controllers, virtual fieldbuses, simulation tool, etc. and their interconnection, further including machine management software to instantiate and run all components equivalent to starting the real machine, and all required software licenses. The virtual machine by this method is available as a software file, which will be provided by e.g. a machine builder and can be distributed from a machine builder to, for example, a system integrator, via internet. The system integrator downloads the software container containing the virtual machine and integrates it into the virtual production line at the position where it is required.

A virtual production machine hides the internal structure and components. So, different virtual production machines from different suppliers can be integrated into the line, even controllers from different automation suppliers can be used.

A virtual production machine visualizes its operations through a user interface, e.g. a screen of a simulation tool and a virtualized HMI.

As part of a virtual production line the virtual production machine needs to be enabled to get synchronized with other virtual machines. For this purpose, a virtual production machine provides two interfaces. First, there is a data Communication Interface 17, which may be an Ethernet based interface or any other standard communication interface through which the virtual production machine can be hooked-up to a superior line controller 19, a SCADA, HMI (Human Machine Interface) or MES (Manufacturing Engineering System) or to neighbor machines up- or downstream. The term up- or downstream refers to the direction of material flow through the production line. Multiple virtual production machines can be integrated in a virtual production line and connected to superior systems through their data communication interface 17 as in reality. The data communication interface 17 enables a communication link to a logical interaction means 6, which is for example an industrial Ethernet communication bus.

Testing and commissioning of a virtual production line 1 requires, besides the virtual production machines 2, 3, 4, 5, also their logical and physical interaction and respective means to enable logical and physical interaction.

The logical interaction, be it from one virtual machine to another one or from a virtual machine to the line communication, is achieved through the external communication interface 17 of the virtual machines according to the customer's specification. The arrows 20 schematically represent the logical interaction between the communication interface 17 of each virtual machine with the logical interaction means 6, for example the industrial Ethernet bus.

Mimicking the physical interaction requires simulating the material flow throughout the complete virtual production line 1. The virtual production line provides the possibility to simulate a virtual material flow. Arrows 21 schematically represent the simulation of the physical interaction, establishing a virtual material flow.

In the initial phase of production line commissioning, it is assumed that real machines are not available. So the virtual commissioning is completely virtual. A virtual material flow is considered in the virtual production line 1.

A virtual production machine 2, 3, 4, 5 produces virtual parts 8, 9 which are transported to the next machine in the line through virtual out-feeders and in-feeders.

This material flow is simulated on top of the virtual production machines 2, 3, 4, 5 and requires synchronous operations of all production machines in the line.

Machines in a production line are either synchronized through superior line orchestration, such as line controller 19, SCADA system, etc., or synchronized on the material flow side, which latter mode is called autonomous machine synchronization.

Line orchestration uses machine signals, such as for example only "MachineDone" or other in principle known machine signals, to start the next machine ("MachineStart") according to the material flow. In this case a virtual (or even a real) line controller 19, similar to a virtual machine, is used to synchronize the virtual machines along the material flow by sending signals through their data communication interfaces 17 as in reality.

Synchronization through martial flow implies detecting a virtual part across machine boundaries which is not simulated by a virtual production machine. It is considered that a virtual production machine is not able to detect a virtual incoming part from another virtual production machine. So a technique is needed to synchronously trigger the execution of the next machine cycle on arrival of a part from the up-stream machine. In reality this can be achieved through sensors on the in-feeder. This is simulated in a virtual production line through sensor value injection. It triggers a production machine through the simulation interfaces 7, also called material flow simulation means, which each virtual production machine provides. The CAD model of the part to be virtually created in the neighbor downstream machine is provided through standard CAD formats and accessed through the simulation interface. Figure 1 shows both options.

Each virtual production machine 2, 3, 4, 5 can be simulated by a separate container providing an independent view. These views then are synchronized; i.e. a virtual part moving out of one virtual machine has to be moved synchronously into the next virtual downstream machine.

Once the real machines are available, the virtual production machines can be stepwise replaced by their real-world pendant without any modification, as the virtual production machines behave exactly as the real machines. So, the real machine once available replaces the virtual production machine resulting in a mixed environment composed of real and virtual production machines.

Extending existing production lines by virtual production machine is another example of mixed environments. These cases result in extending the material flow simulation.

Autonomous Machine synchronization requires parts to be moved from one machine to the other machine. Thereby, the machine producing a part, the so-called source machine, may either be a real or a virtual production machine. The same applies to the receiving machine. The part produced is either a real part or a virtual part.

Line simulation is used to simulate the part transport between real and virtual machines or between virtual and virtual machines as described below.

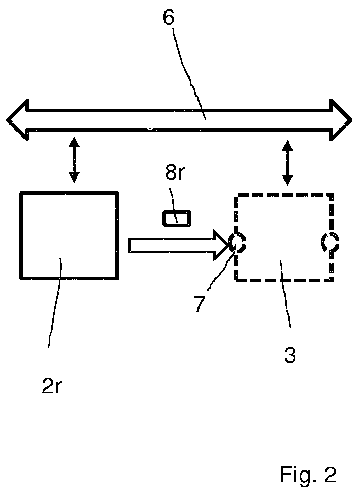

Figure 2 shows the case 2: RM - (RP) - VM.

Figure 2 illustrates the exemplary case where during commissioning a real part is handled by a virtual production machine. In this example, compared to figure 1, the virtual bag-filling machine 2 has been replaced by a real bag-filling machine 2r. The packaging machine 3 is a virtual packaging machine 3 as in the example of figure 1. Here in figure 2, to visualize the difference between the real machine 2r and the virtual machine 3, the virtual machine 3 is represented by a square with dotted lines. Using visual tracking mechanisms or a dedicated sensor, the real part 8r and its position is tracked. At defined positions, the virtual packaging machine 3 is triggered through sensor value injection using the simulation interface 7 of the virtual packaging machine 3. For commissioning purposes, the real part 8r produced by the real machine is dropped.

Succeeding virtual production machines are triggered by virtual material flow as described above.

Augmented Reality (AR) technology can optionally be used to superimpose the virtual machine on the real scene.

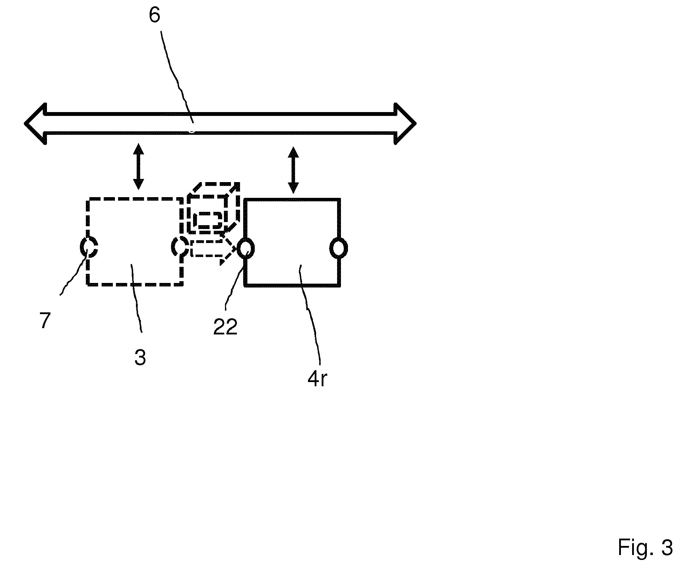

Figure 3 shows the case 3: VM - (VP) - RM.

Figure 3 illustrates the exemplary case where during commissioning a virtual part is handled by a real production machine. In this example, compared to figure 1, the virtual labeling machine 4 has been replaced by a real labeling machine 4r. The packaging machine 3 is a virtual packaging machine 3 as in the example of figure 1. To visualize the difference between the real machine 4r and the virtual machine 3, the virtual machine 3 is represented by a square with dotted lines, as is the virtual package 9. For commissioning, the virtual package 9 is delivered by the virtual packaging machine 3 to the real labeling machine 4r.

Real machines cannot detect parts of a virtual material flow. So here according to the invention, the virtual material flow simulation provides position information of the virtual part 9 which triggers the real machine 4r at defined positions. Triggering the real machine 9r is achieved through the data communication interface, for example an OPC interface 21 which provides access to the variable of the in-feeder sensor (sensor value injection), of the real machine 4r, whereby the real machine 4r runs in test or maintenance mode, i.e. it doesn't consume real material while executing.

In case 4 (RM - (VP) - VM), upon completion of the real machine - signaled through the data communication interface - , a resulting virtual part is generated again by the line simulation and moved further to the next virtual machine, here the virtual palletizer 5 (see figure 1), for "take over". Again, optionally using Augmented Reality (AR) technology, the virtual machine as well as the virtual part can be superimposed on the real scene including virtual production machines and real production machines.

It is understood that also in the case shown in figure 1, virtual parts handled by virtual machines, augmented reality (AR) technology can be used to overlay the virtual machines and the virtual part on a real scene.

Case 5 is merely a combination of the left hand side of case 4 and the right hand side of case 3.

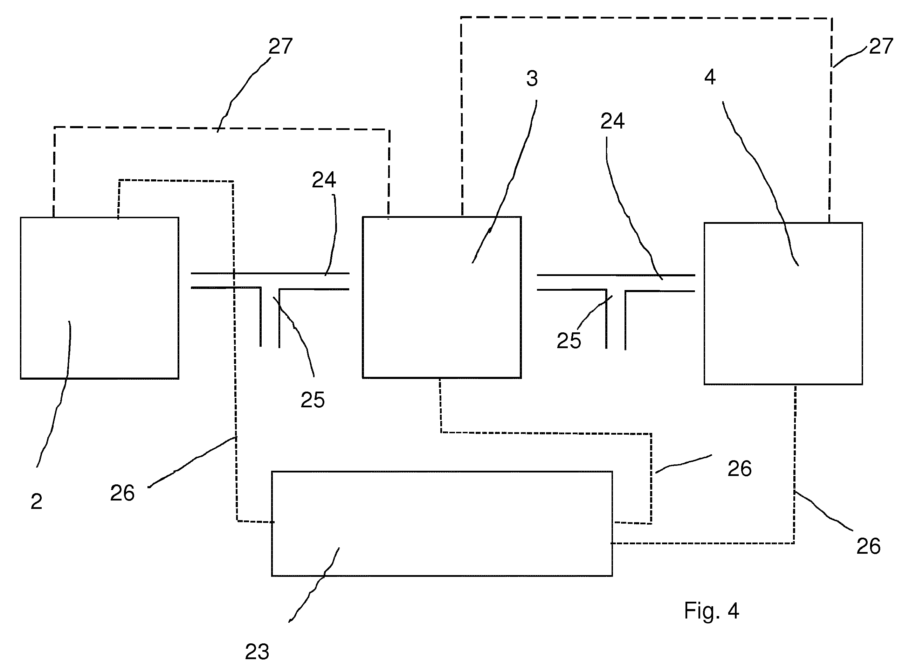

Figure 4 illustrates in an exemplary and schematic way two options for material flow simulation according to the invention. Figure 4 shows three machines, 2, 3, 4, each can be a virtual machine as described before. Real parts are being moved from one machine to the other using a conveyor belt system 24. The conveyor belt 24 has branch-off sections 25, allowing for example to branch out the transportation of a real product on its way through the production line. Material flow through the production line is simulated, including the branch off. Simulating the material flow includes importing into and exporting out of a machine the CAD data of a product. In figure 4 there is in addition a material flow simulation means 23.

Dotted line 26 symbolizes the data flow in the case that the machines 2, 3, 4 are synchronized via the material flow simulation means 23. Signals from machine 2, for example CAD data of parts produced, or machine 2 finished, etc., are delivered to the material flow simulation means 23. In this case the material flow simulation means is designed similar to a virtual machine, and it is used to synchronize the machines along the material flow. Virtual and real production machines are connected to the material flow simulation means through their data communication interface. The material flow simulation means 23 runs runs the material flow control program as finally applied to the real production line and the real material transportation means, e.g. the conveyor system 24. Production machines 2, 3, 4 and conveyor system 24 are integrated in the material flow simulation means 23. Material flow simulation means 23 hands on respective signals to the next machines in the line, for example machine 3. Such signals may be "machine start" signal, or CAD data of a real or virtual product, under consideration of the conditions of the material flow, for example if the product shall be handed over from machine 2 to machine 3 at all, or if it shall follow the branch-off path at branch 25.

Dotted line 27 symbolizes as alternative the autonomous machine synchronization. This requires a part, be it real or virtual, to be moved directly from one machine to the other. The machine producing a part, so called source machine, for example machine 2, may either be a real or a virtual production machine. The same applies to the receiving machine, for example machine 3. The part produced is either a real or a virtual part. Line synchronization is used to simulate the part transport between the real and virtual machines or between virtual and virtual machines as described before.

An interesting application case of the method and system according to the invention is the ability to do a production optimization during life operation of the production process. To achieve that, during the ongoing production process a virtual machine is connected in parallel to a real machine, and the virtual machine is running in parallel to the real machine. The virtual machine is integrated into the production line at the same location performing the same steps as the real machine. During running production process, now the virtual machine performance can be optimized, without influencing the real machine's performance. This means, the real machine keeps on producing, based on the currently set parameters. Once the optimization of the virtual machine is finished, the settings of the virtual machine are fed into the real machine, the real machine so to say being replaced or updated by the optimized virtual machine.

Summarizing, a system according to the invention in an advantageous manner allows to simulate the virtual production machine(s), simulate the material flow, communicates with the superordinated line management system, enables an augmented reality (AR) presentation of the production line, and can detect the state of real machines which may be part of a mixed production line.

List of reference signs

| | |
|---|---|
| 1 | virtual production line |
| 2 | virtual production machine, virtual bag-filling machine |
| 2r | Real bag-filling machine |
| 3 | virtual production machine, virtual packaging machine |
| 4 | virtual production machine, virtual labelling machine |
| 4r | Real labeling machine |
| 5 | virtual production machine |
| 6 | logical interaction means |
| 7 | material flow simulation interface |
| 8 | Virtual bag |
| 8r | Real bag |
| 9 | Virtual package |
| 10 | Virtual label |
| 11 | Virtual robot |
| 12 | Simulation model |
| 13 | Virtual robot controller |
| 14 | Virtual drive controller |
| 15 | Higher level virtual controller |
| 16 | Virtual fieldbus connection |
| 17 | Communication interface |
| 18 | Simulation interface |
| 19 | Line controller |
| 20 | Arrows representing interaction between communication interface 17 and logical interaction means 6 |
| 21 | Arrows representing the virtual material flow |
| 22 | OPC interface of real machine |
| 23 | Material flow simulation means |
| 24 | Conveyor system |
| 25 | Branch off |
| 26 | Dotted line |
| 27 | Dotted line |

**Claims**

1. A method for commissioning and optimization of a production line , whereby in the real world the production line is composed of at least two production machines, said production machines being synchronized, and where there is a material flow along the production line and between the production machines, **characterized in that** the method further comprises the steps of simulating at least part of the material flow in the production line, and synchronizing the machines along the at least partly simulated material flow.

**2.** The method of claim 1, further comprising the steps of

- providing at least one of the production machines (2, 3, 4, 5) as a virtual machine (3), the machines being integrated to form a virtual production line (1) or a mixed production line combining real and virtual machines, wherein the virtual production machine (3), and the virtual production line (1) are virtual versions of their respective real world equivalents;
- providing a material flow simulation interface (7) at the virtual machine (3) for simulating the virtual material flow.

**3.** The method of claim 2, further comprising the step of providing a data communication interface (22) to a real machine for simulating the virtual material flow.

**4.** The method of any of the preceding claims, further comprising the step of providing a logical interaction means (6) by which a logical interaction between the machines (2, 3, 4, 5) is achievable.

**5.** The method of claim 2 or 3, further comprising the steps of providing virtual controllers (13, 14, 15) to the virtual production machine, said virtual controllers (13, 14, 15) behaving like real controllers, running the real control applications, and said virtual controllers (13, 14, 15) being connected to virtual sensors, virtual actuators or other virtual devices.

**6.** The method of claim 5, further comprising the steps of providing the virtual production machine (3) as a software container, including all required virtual controllers, virtual fieldbuses, simulation tool, etc. and their interconnection, further including machine management software to instantiate and run all components equivalent to starting the real machine, and all required software licenses.

**7.** The method of claim 5, further comprising the steps of integrating multiple virtual production machines in a virtual production line, providing a data Communication Interface (17) to each virtual machine and connecting the virtual machines to a superior system (19) through the data communication interface (17).

**8.** The method of claim 7, further comprising the steps of providing a simulation Interface (18) to the virtual machine, which includes the ability to simulate various steps of the material flow simulation.

**9.** The method of claim 2, further comprising the steps of replacing a virtual machine (2) by its real world equivalent (2r) once the real machine (2r) is available, without any modification, resulting in a mixed environment composed of real (2r) and virtual (3) production machines.

**10.** The method of claim 9, further comprising the step of using Augmented Reality technology to superimpose the virtual machine (3) on a real scene.

**11.** The method of claim 2 or 3, **characterized in that** the method further comprises synchronizing the machines through line orchestration using machine signals to start the next machine according to the material flow.

**12.** The method of claim 11, further comprising the step of synchronizing the virtual machines on the material flow side, using a material flow simulation means (23) similar to a virtual machine to synchronize the machines along the material flow.

**13.** The method of claim 2 or 3, **characterized in that** the method further comprises synchronizing machines on the material flow using autonomous machine synchronization, wherein parts are moved from one machine to another machine.

**14.** A system for commissioning and optimization of a production line, which is configured to put in execution the method according to one of the preceding claims.

**15.** A machine-readable medium storing machine-executable instructions that, when executed, cause a system for commissioning and optimization of a production line to put in execution the method according to one of the preceding claims.

Fig. 1

Fig. 2

Fig. 3

4r

22

6

3

7

Fig. 4

Europäisches
Patentamt

European
Patent Office

Office européen
des brevets

# EUROPEAN SEARCH REPORT

Application Number

EP 16 16 7311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Francesco Caputo ET AL: "A STRUCTURED APPROACH TO SIMULATE MANUFACTURING SYSTEMS IN VIRTUAL ENVIRONMENT", XVIII Congreso Internacional de Ingeniería Gráfica, Barcelona, Spain, 31st May-2nd June., 31 May 2006 (2006-05-31), XP055215009, Retrieved from the Internet: URL:http://citeseerx.ist.psu.edu/viewdoc/download?doi=10.1.1.111.9646&rep=rep1&type=pdf [retrieved on 2015-09-21] * abstract * * Section 2, 3, 4, 5 * ----- | 1-15 | INV. G05B19/418 |
| X | F Bennis ET AL: "Virtual reality: A human centered tool for improving Manufacturing", Proceedings of Virtual Concept 2005, 8 November 2005 (2005-11-08), XP055215007, Retrieved from the Internet: URL:http://arxiv.org/ftp/arxiv/papers/0707/0707.3563.pdf [retrieved on 2015-09-21] * abstract * * Section1, 2 * ----- | 1-15 | TECHNICAL FIELDS SEARCHED (IPC) G05B G04B |
| X | WO 2009/046726 A1 (SIEMENS AG [DE]; STOLPER THILO [DE]) 16 April 2009 (2009-04-16) * abstract * * page 1, line 24 - page 10, line 5 * * page 12, line 18 - page 13, line 24 * * page 14, line 30 - page 17, line 6 * ----- -/-- | 1-15 | |

The present search report has been drawn up for all claims

| Place of search | Date of completion of the search | Examiner |
|---|---|---|
| Munich | 13 October 2016 | Kopp, Klaus |

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 790 101 A1 (ABB TECHNOLOGY AG [CH]) 15 October 2014 (2014-10-15)<br>* abstract *<br>* paragraph [0009] - paragraph [0010] *<br>* paragraph [0020] *<br>* paragraph [0030] - paragraph [0034] *<br>* paragraph [0047] - paragraph [0051] *<br>----- | 1-15 | |

TECHNICAL FIELDS
SEARCHED        (IPC)

The present search report has been drawn up for all claims

| Place of search | Date of completion of the search | Examiner |
|---|---|---|
| Munich | 13 October 2016 | Kopp, Klaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 7311

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2016

| Patent document cited in search report | | Publication date | Patent family member(s) | | Publication date |
|---|---|---|---|---|---|
| WO 2009046726 | A1 | 16-04-2009 | AT | 515725 T | 15-07-2011 |
| | | | EP | 2193409 A1 | 09-06-2010 |
| | | | US | 2010211361 A1 | 19-08-2010 |
| | | | WO | 2009046726 A1 | 16-04-2009 |
| EP 2790101 | A1 | 15-10-2014 | NONE | | |

EPO FORM P0459

For more details about this annex : see Official Journal of the European Patent Office, No. 12/82